# EUROPEAN PATENT APPLICATION

(11) **EP 2 323 411 A1**
(43) Date of publication of application: **18.05.2011**
(21) Application number: 09809963.3
(22) Date of filing: 27.08.2009
(51) Int. Cl.: H04N 9/64, G06T 1/00, G09G 3/20, G09G 3/34, G09G 3/36, G09G 5/02, G09G 5/10, G09G 5/36

(54) **IMAGE DISPLAY APPARATUS**

(30) Priority: 29.08.2008 JP 2008221884; 21.08.2009 JP 2009192555
(71) Applicant: Sharp Kabushiki Kaisha, Osaka-shi, Osaka 545-8522 (JP)
(72) Inventor: KONDOH Naoko, Osaka-shi Osaka 545-8522 (JP); GOTOH Toshiyuki, Osaka-shi Osaka 545-8522 (JP)
(74) Representative: Müller - Hoffmann & Partner
(86) International application number: PCT/JP2009/064921
(87) International publication number: WO 2010/024313

(57) **Abstract**

In order to simply and easily implement an elimination of a color deviation and a color adjustment for a color correction to a favorable color in an arbitrary portion of a color region in a color reproduction range, a video processing circuit 2 corrects a luminance, a saturation and a hue of a color by the correction quantity corresponding to a reference correction coefficient with regard to a signal value of an input video signal indicating a color within a designated color region defined by a designated range of the luminance, the saturation and the hue when the color indicated by the signal value is a color in the center of the designated color region or at a core for occupying a predetermined range around the center. Otherwise, the video processing circuit 2 corrects the luminance, the saturation and the hue of the color of the signal value by the correction quantity gradually smaller as a position in a color space of the color indicated by the signal value approaches a boundary position of the designated color region.

## Description

### Field of the Invention

The present invention relates to a video display device for correcting a color in an arbitrary portion of a color range in a color reproduction range of an input video signal, based on each of a luminance, a saturation, and a hue.

### Background of the Invention

A conventional and ordinary video display device comprises a display (hereinafter, referred to as "standard color gamut display") displayable of a video in colors in a color reproduction range conforming to the sRGB (standard RGB) standard, a national standard of IEC (International Electrotechnical Commission). In contrast, a recent video display device, particularly a liquid crystal display device, realizes a higher quality picture, having a wider representable range of colors than the conventional device.
For example, when a video signal conforming to the sRGB standard is input, and when video display is conducted by directly using the video signal, a liquid crystal display device, having; a backlight that has an LED of a high color purity in light emission colors as a light source and, a liquid crystal panel (an example of a display) illuminated by the backlight, displays video in colors in a color reproduction range (hereinafter, referred to as "expanded color reproduction range") wider than that of the sRGB standard. Such a display (hereinafter, referred to as "wide color gamut display") is displayable of brighter (higher saturation) colors than the standard color gamut display.

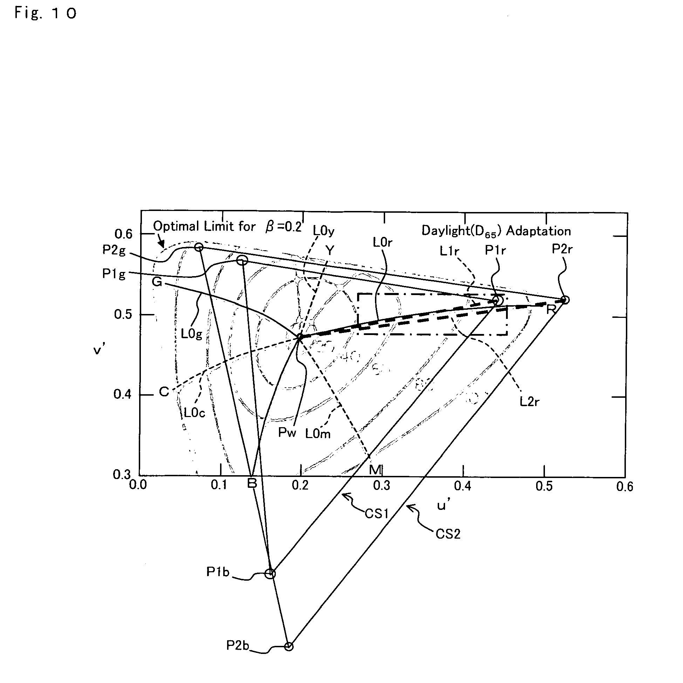

FIG. 10 shows a case when conducting video display based on a video signal conforming to the sRGB standard. The figure shows, on an u' v' chromaticity diagram, a color reproduction range CS1 displayed on the standard color gamut display and a color reproduction range CS2 displayed on the wide color gamut display.
In FIG. 10, the positions of three points P1r, P1g, and P1b in the color reproduction range CS1 of the standard color gamut display show red, green, and blue of the highest saturation in the color reproduction range CS1, respectively. Similarly, the positions of three points P2r, P2g, and P2b in the color reproduction range CS2 of the wide color gamut display show red, green, and blue of the highest saturation in the color reproduction range CS2, respectively.
As shown in FIG. 10, the color reproduction range CS2 is broader than the color reproduction range CS1, and the wide color gamut display is therefore displayable of colors having the saturation higher than that of the standard color gamut display.

And also, in FIG. 10, a straight line L1r (an equal hue line of red) is shown with a thick dash line that represents a color range of an equal hue from achromatic colors (position of a point Pw) of the lowest saturation to red (position of a point P1r) of the highest saturation in the standard color reproduction range CS1. Similarly, in FIG. 10, a straight line L2r (an equal hue line of red) is shown with a thick dash line that represents a color range of an equal hue from achromatic colors (position of a point Pw) of the lowest saturation to red (position of a point P2r) of the highest saturation in the expanded color reproduction range CS2.
Furthermore, FIG. 10 shows solid lines: L0r, L0g, L0b, L0c, L0m, and L0y, for red, green, blue, cyan, magenta, and yellow, respectively that represent a color range of equal hues visually sensed as having the same hue from achromatic colors to each color (chromatic color). In short, the solid lines L0r, L0g, L0b, L0c, L0m, and L0y represent the equal hue lines of each color: red, green, blue, cyan, magenta, and yellow. The visually equal hue lines L0r, L0g, L0b, L0c, L0m, and L0y for each color shown in FIG. 10 are also described in the Nonpatent literature 1.

Here, the red hue is described.
As shown in FIG. 10, the visually equal hue line of red L0r has a shape curved in a direction having a convexed shape near the yellow hue.
The red equal hue line L1r in the standard color reproduction range CS 1 is a straight line, however, closely resembles to the visually equal hue line of red L0r. Therefore, when video display based on a video signal conforming to the sRGB standard is conducted on the standard color gamut display, the reddish video is reproduced by colors having approximately the same hues from achromatic colors (position of the point Pw) to a color of the highest saturation (position of the point P1r). However, the color reproduction range CS1 of the standard color gamut display is narrow, and thus, the brightness for displaying red having a high saturation lacks.
Additionally, the red equal hue line L1r in the standard color reproduction range CS1 has red of the highest saturation (the position P2r) that closely resembles to the visual red of a high saturation.
Therefore, when video display based on a video signal conforming to the sRGB standard is conducted on the wide color gamut display, with respect to red having an extremely high saturation, the primary color the video signal indicates is reproduced highly brightly in the video.

Patent literature 1: Japanese Unexamined Patent Publication No. H08-130655
Nonpatent Literature 1: G. Wyszecki, and W.S. Stiles, Color Science: Concepts and Methods, Quantitative Data and Formulae (2nd ed.), pp.447, John Wiley & Sons, New York, 2000

### Summary of the Invention

### Problem to be Solved by the Invention

However, when conducting video display on the wide color gamut display based on a video signal conforming to the sRGB standard employed in a common television broadcasting, there occurs a problem of color deviation that a color different from an original color is displayed particularly on a portion of the color region having an intermediate saturation. For example, with respect to the red hue shown in FIG. 10, an equal hue line of red L 1r in the standard color reproduction range CS 1 is a straight line and, in the portion of an intermediate saturation, has a great gap against the visually equal hue line of red L0r. Therefore, when video display based on a video signal conforming to the sRGB standard is conducted on the wide color gamut display, with respect to red having an intermediate saturation, the visual hue largely displaces from the red of the highest saturation, causing a color deviation of a magenta-tinged color. Particularly, when a color deviation occurs in a video of skin tone including a red color component having an intermediate saturation, an user (viewer) might feel the video very unnatural. In addition, color deviations, such as that the tone should be a skin tone is displayed in a red-tinged color, and the color should be red is displayed in a magenta-tinged color, may occur.
There is, therefore, a demand for correcting such color deviations for colors in a partial range.
And also, there has been a demand for colors in an arbitrary partial color region in the entire color reproduction range be converted into favorable colors without a sense of discomfort, even when a color gamut is not expanded.
As described in the Patent literature 1, a video signal may be subjected to color gamut compression processing, so that the video is displayed in the standard color reproduction range CS 1 on the wide color gamut display.
However, to provide a video signal with the color gamut compression processing causes an unfavorable correction of a signal value in the color region not requiring a color adjustment. For example, when video display is conducted on the wide color gamut display based on a video signal obtained by providing the video signal conforming to the sRGB standard with the color gamut compression processing, the wide color gamut display displayable of bright red having a high saturation cannot be fully utilized.
In addition, when conducting color adjustment (correction of a signal value of a video signal) for eliminating the color deviation in a portion in a color region or for correcting colors in an arbitrary portion of a color region to favorable colors, it is preferred that the color adjustment can be executed with a high degree of freedom and the parameter setting for the color adjustment is easy.
Accordingly, the present invention has been completed on the basis of the above circumstances, and its object is to provide a video display device capable of color adjustments for eliminating a color deviation in a portion of a color region in a color reproduction range and correcting a color in an arbitrary portion in a color region to a favorable color, and moreover, the video display device easily implementing a parameter setting for such a color adjustment.

### Means for Solving the Problem

To achieve the above object, a video display device according to the present invention corrects a signal value of an input video signal and displays a video based on a corrected video signal on a display, the video display device comprising each element shown in the following (1) to (3).
(1) a designated color region setting means for setting a designated range of each of a luminance, a saturation and a hue
(2) a reference correction coefficient setting means for setting a reference correction coefficient of a luminance, a saturation and a hue
(3) a signal correcting means for correcting a luminance, a saturation and a hue of a color by the correction quantity corresponding to a reference correction coefficient with regard to a signal value of an input video signal indicating a color within a designated color region defined by a designated range of the luminance, the saturation, and the hue when the color indicated by the signal value is a color in the center of the designated color region or at a core for occupying a predetermined range around the center, the signal correcting means otherwise correcting each of a luminance, a saturation, and a hue of a color of the signal value by the correction quantity gradually smaller as a position in a color space of the color indicated by the signal value approaches a boundary position of the designated color region
In addition, the input video signal may be a video signal conforming to the sRGB standard, and the display may be a wide color gamut display developing a color reproduction range wider than the color reproduction range of the sRGB standard when a video signal conforming to the sRGB standard is input.
Also, an example for a typical wide color gamut display is a liquid crystal panel illuminated by a backlight having an LED as a light source.

A video display device according to the present invention conducts a color adjustment (correction of a signal value of the input video signal) of a designated portion of a color region (the designated color region) in a color reproduction range of the input video signal. Accordingly, when a color deviation occurs in a portion of a color region in a color reproduction range, a video display device according to the present invention can conduct a video display, eliminating the color deviation with the input video signal used as it is, while utilizing the content of the input video signal as it is in other color regions. In addition, a video display device according to the present invention is preferable not only for eliminating a color deviation but for conducting a color adjustment for correcting a color in an arbitrary portion of a color region to a favorable color.
For example, when the input video signal is a video signal conforming to the sRGB standard and the display is a wide color gamut display, the wide color gamut display displayable of bright primary colors (R, G, and B) each having a high saturation can be fully utilized, eliminating a color deviation of a color (skin tone and the like) having an intermediate saturation.
Additionally, with respect to a signal value indicating a color within the designated color region, a signal value of a color at the core (center) in the designated color region is corrected by the correction quantity in accordance with the reference correction coefficient that has been set, whereas signal values of other colors are corrected by the correction quantity gradually smaller as a position of the color approaches a boundary position of the designated color region. Therefore, before/after the signal value correction, the color continuity (gradation) can be ensured.
The reference correction coefficient may be applied to a color region occupying a predetermined range at the center of the designated color region, and this case, the core may be a position occupying a predetermined range around the center of the designated color region.
In the present invention, designation (setting) of the designated color region and a correction coefficient for a color as color adjustment parameters is conducted separately for each of three independent parameters: luminance, saturation, and hue, which specify a color. Therefore, there is no need to consider the mutual interference of each parameter, allowing an easy setting of color adjustment parameters.

In addition, for example, the designated color region setting means may set a center value of each of a luminance, a saturation, and a hue in the designated color region or a designated value of a width of each of the luminance, the saturation, and the hue based on the center value in accordance with an operation input, so as to set a designated range of each of the luminance, the saturation, and the hue.
This allows an user to directly set (input) the center position of the designated color region as a reference of the color adjustment (signal value correction) and a correction coefficient (the reference correction coefficient) of a color in the center position. Accordingly, the relationship between a setting value (designated value) and a result of the color adjustment can be easily understood.
Additionally, the designated color region setting means may set a designated value of a width of each of the luminance, the saturation, and the hue by selecting from a plurality of predetermined candidate values in accordance with an operation input.
This facilitates a setting (designation) of color adjustment parameters, even though the degree of freedom of the color adjustment might be somewhat sacrificed.

The core may be a portion occupying a range of a previously set ratio with respect to the designated color region around the center position in the designated color region.
When the size of the core is required to be enlarged/reduced as the size change of the designated color region, this omits a changing process of a parameter designating the size of the core in accordance with every change of the designated color region setting, and thereby facilitating a setting (designation) of color adjustment parameters.
A video display device according to the present invention may comprise an element as shown in the following (4).
(4) a core selecting means for selecting, in accordance with an operation input, between whether the center position in the designated color region is the core or a portion occupying a range of a predetermined ratio with respect to the designated color region around the center position in the designated color region
This allows the degree of freedom of the color adjustment to be enhanced, without increasing time and labor for a setting of color adjustment parameters.

And also, the signal correcting means may conduct the processing shown in the following (4-1).
(4-1) The signal correcting means calculates the correction quantity of a saturation gradually smaller as its position approaches a boundary position exclusively within the region wherein the saturation value is greater than or equal to zero and including the center position or the core, when a signal value of the input video signal to be corrected includes within the designated color region a region where a saturation value in the color space becomes negative
   With a small component value of a saturation included in a signal value of an input video signal to be corrected, a designated color region set by the designated color region setting means may include a region wherein the component of a saturation in the color space is negative. However, the lower limit value of a component value of a saturation of an input video signal to be corrected is actually zero. Here, the correction quantity of a saturation gradually smaller as its position approaches a boundary position is calculated exclusively within a range of a region, wherein the lower limit value of a component value of a saturation included in a signal value of the input video signal is equal to or greater than zero, in a designated color region set by the designated color region setting means. This enables a more precise calculation of the correction quantity of a saturation gradually smaller as its position approaches a boundary position, as compared with a calculation including a region wherein the component of a saturation becomes negative.
   Additionally, a video display device according to the present invention may comprise an element as shown in the following (5).
(5) a weight correction coefficient setting means for setting the correction quantity of each of a luminance, a saturation, and a hue gradually smaller as approaching a boundary position to a value same as the reference correction coefficient or a prescribed first value of each of a luminance, a saturation, and a hue
To calculate the correction quantity of each of a luminance, a saturation, and a hue gradually smaller as approaching a boundary position takes time, requiring hardware resources, such as many memories, a CPU, and an ASIC. Here, the correction quantity of each of a luminance, a saturation, and a hue gradually smaller as approaching a boundary position is set to a value same as the reference correction coefficient or a prescribed first value of each of a luminance, a saturation, and a hue, so that an uniform correction can be provided to each of a luminance, a saturation, and a hue of the input video signal within the designated color region. Therefore, hardware resources for calculating the correction quantity of each of a luminance, a saturation, and a hue gradually smaller as approaching a boundary position can be spared, so as the calculating time.

And also, the signal correcting means may conduct the processing shown in the following (4-2).
(4-2) With an origin position in the color space included in the designated color region as a reference position for correcting a signal value of the input video signal, the signal correcting means corrects each of a luminance, a saturation, and a hue of a color of the signal after adding a prescribed second value to a value indicating the origin position, and, after the correction, subtracts the prescribed second value from a value indicating the signal
In correction of a signal value of the input video signal, an origin position in the color space as a reference for calculating the correction value is identified, and a signal value of the input signal is changed in accordance with a relationship with the origin position.
With a signal value to be corrected in the origin position, a prescribed value is added to the signal value, and the component information of a saturation and a hue is added to the signal value, so that a signal value of the input video signal can be corrected. The information padded for the correction is deleted by subtracting a prescribed value from a corrected signal value of the input video signal.
This allows the signal correcting means to correct a signal value of the input video signal even when the signal value indicates an achromatic color. And also, this processing corrects a color temperature of white indicated by an input video signal, without changing the gamma of a television set.
Moreover, at the origin position, a value indicating a saturation and a hue and included in a signal value of the input video signal may be zero.
This facilitates an easy identification of an origin position in the color space as a reference for calculating the correction value when correcting a signal value of an input video signal.

According to the present invention, with a color deviation occurred in a partial color region in a color reproduction range using an input video signal as it is, like in a case of conducting a video display on a wide color gamut display based on a video signal conforming to the sRGB standard, the color deviation can be eliminated by an easy setting of color adjustment parameters. While in other color regions, a video display can be conducted fully utilizing the content of an input video signal as it is. Furthermore, the present invention also enables an easy color adjustment, when a color in an arbitrary partial color region in the entire color reproduction range is required to be converted into a favorable color without a sense of discomfort.

### Brief Description of the Drawings

FIG. 1 is a block diagram showing a general structure of a liquid crystal display device X as an example of a video display device according to an embodiment of the present invention;
FIG. 2 is a view showing an example of a color adjustment screen in the video display device X;
FIG. 3 viewed in a direction orthogonal to a Y-axis in a Ycbcr coordinate system shows a first example of a designated color region and a core as a color adjustment target of the liquid crystal display device X;
FIG. 4 viewed in a Y-axis direction in a Ycbcr coordinate system shows the first example of a designated color region and a core as a color adjustment target of the liquid crystal display device X;
FIG. 5 is a perspective view showing the first example of a designated color region and a core as a color adjustment target of the liquid crystal display device X;
FIG. 6 viewed in a direction orthogonal to a Y-axis in a Ycbcr coordinate system shows a second example of a designated color region and a core as a color adjustment target of the liquid crystal display device X;
FIG. 7 viewed in a Y-axis direction in a Ycbcr coordinate system shows the second example of a designated color region and a core as a color adjustment target of the liquid crystal display device X;
FIG. 8 viewed in a Y-axis direction in a Ycbcr coordinate system shows an example wherein a hue weight Wt is adjusted to 1 in the entire designated color region as a color adjustment target of the liquid crystal display device X;
FIG. 9 viewed in a Y-axis direction in a Ycbcr coordinate system shows an example wherein an origin on a plane CbCr as a color adjustment reference of the liquid crystal display device X is offset;
FIG. 10 shows a color reproduction range of a standard color gamut display and a color reproduction range of a wide color gamut display on an u' v' chromaticity diagram, in a case of conducting video display based on a video signal conforming to the sRGB standard.

### Description of Symbols

X...liquid crystal display device
1...video signal input unit
2...video processing circuit
3...liquid crystal driving circuit
4...liquid crystal panel
5...LED feed circuit
6...LED backlight
7...light control circuit
8...main control circuit
81...MPU
82...EEPROM
Ax...designated color range
Ay...core

### Best Mode for Carrying Out the Invention

Further features and advantages of the present invention will become more readily apparent from the following detailed description when taken in conjunction with the accompanying drawings. Additionally, the following embodiment is merely an example of the present invention which should not limit the technical scope of the present invention.

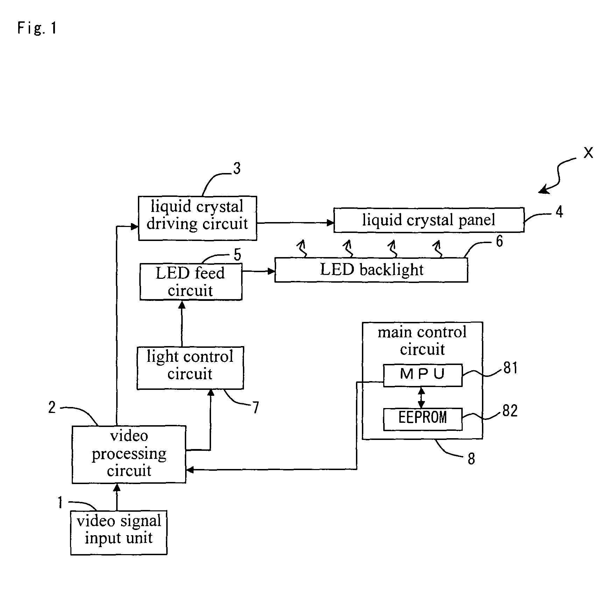

Firstly, the configuration of a liquid crystal display device X as an example of a video display device according to an embodiment of the present invention is described with reference to a block diagram shown in FIG. 1.
As can be seen from FIG. 1, the liquid crystal display device X includes a video signal input unit 1, a video processing circuit 2, a liquid crystal driving circuit 3, a liquid crystal panel 4, an LED feed circuit 5, an LED backlight 6, a light control circuit 7, and a main control circuit 8, and the like.
The LED backlight 6 having an LED as a light source illuminates the liquid crystal panel 4. The LEDs are aligned on the rear surface side of the liquid crystal panel 4 displaying a video, being a light source constituted by a white LED or LEDs of three RGB colors (three LEDs).
The liquid crystal panel 4 illuminated by the LED backlight 6 is an example of a wide color gamut display for, when the input video signal conforming to the sRGB standard is input to the liquid crystal driving circuit 3 through the video signal input unit 1 and the video processing circuit 2, displaying video in colors in the expanded color reproduction range CS2 (see FIG. 10) wider than the color reproduction range of the sRGB standard (the standard color reproduction range CS1 in FIG. 10). In addition, a backlight having a light source other than an LED may be employed.

The video signal input unit 1 is an interface for inputting a video signal. Hereinafter, a video signal input through the video signal input unit 1 is referred to as "input video signal".
The video processing circuit 2 executes various signal processing based on the input video signal.
For example, the video processing circuit 2 corrects a signal value of the input video signal in accordance with a command from the main control circuit 8.
More particularly, upon receiving a command for operating in the later-described "standard mode" from the main control circuit 8, the video processing circuit 2 conducts color gamut compression to the input video signal. This color gamut compression processing is, as can be seen from, for example, the Patent literature 1, for a compression correction of a signal value of the input video signal, so that a display color of the liquid crystal panel 4 (wide color gamut display) at the time when the input video signal is a video signal conforming to the sRGB standard is within the standard color reproduction range CS 1. This allows the video based on the input video signal conforming to the sRGB standard to be displayed on the liquid crystal panel 4 in colors nearly the same as the display colors on the conventional standard color gamut display. The particular details of the color gamut compression processing are omitted here in the description.
In addition, upon receiving a command for operating in the later-described "bright mode" from the main control circuit 8, the video processing circuit 2 executes a color adjustment processing for adjusting (correcting) a display color on the liquid crystal panel 4 by correcting a signal value of the input video signal. The details of the color adjustment processing are described later.

In addition, the video processing circuit 2 sequentially generates a frame signal showing a video luminance (pixel gradation) of each primary color (R, G, and B) in each pixel that constitutes image of one frame in a moving image, based on the input video signal for one frame or the display target video signal for one frame as a signal obtained by conducting the color adjustment processing to the input video signal, and sends the frame signal to the liquid crystal driving circuit 3.
Additionally, every time when the input video signal for one frame is input, the video processing circuit 2 calculates an average luminance level (so called, APL: Average Picture Level), regarding the input video signal as a reference value of the video luminance (gradation level) in the display target video signal, and sends the calculated result to the light control circuit 7. The average luminance level is a weighted average value of a video luminance (gradation level) of each primary color (R, G, and B) in each pixel in the display target video signal for one frame.

Based on the frame signal sequentially transmitted from the video processing circuit 2 in a prescribed cycle, the liquid crystal driving circuit 3 sequentially displays a video for one frame (image in one frame) corresponding to the frame signal on the liquid crystal panel 4.
More particularly, the liquid crystal driving circuit 3 supplies a gradation signal having a voltage (gradation voltage) in accordance with a gradation level (may be called a luminance level) of each primary color (R, G, and B) to a liquid crystal element in each pixel provided in the liquid crystal display panel. This allows the liquid crystal panel 4 to display a video (moving image) based on the input video signal.

The light control circuit 7 determines a luminance of each LED in the LED backlight 6, based on the average luminance level found (calculated) by the video processing circuit 2. Furthermore, the light control circuit 7 decides a control value (for example, a duty ratio in a PWM control) of a supplying voltage for each LED in the LED backlight 6 in accordance with the determined luminance, and sets (outputs) the control value to the LED feed circuit 5.
The LED feed circuit 5 supplies electrical power in accordance with the control value set by the light control circuit 7 to each LED in the LED backlight 6. This adjusts the luminance of the LED backlight 6 to the luminance determined by the light control circuit 7.
Additionally, the video processing circuit 2 and the light control circuit 7 are embodied by, for example, a FPGA and an ASIC, and the like.

The LED feed circuit 5 adjusts supplying power for each LED in the LED backlight 6 according to a control command from the light control circuit 7. For example, the LED feed circuit 5 adjusts the supplying power for each LED by the PWM control. Or, the LED feed circuit 5 may conduct the light control of each LED by adjusting the DC voltage level.
The main control circuit 8 comprises a MPU 81 as a calculating means and an EEPROM 82 as a nonvolatile memory. With control programs stored in a ROM not shown executed by the MPU 81, the main control circuit 8 executes control processing of each element in the liquid crystal display device X.
For example, in the main control circuit 8, the MPU 81 conducts switching processing of video display modes in accordance with an operation input through a remote operator not shown. Here, the video display mode is an operating mode of the video processing circuit 2.
More particularly, the MPU 81 conducts the switching processing between a standard mode and a bright mode as the two video display modes in accordance with an operation input. Then, a command for operating in the switched video display mode is output from the MPU 81 to the video processing circuit 2.
The standard mode is an operating mode for executing the color gamut compression processing to the input video signal so that a display color of the liquid crystal panel 4 (wide color gamut display) is compressed to the standard color reproduction range CS1 from the expanded color reproduction range CS2 shown in FIG. 10.
On the other hand, in the bright mode, the color adjustment processing for adjusting (correcting) a color indicated by the input video signal is executed by correcting a signal value of the input video signal conforming to the sRGB standard, and thereby eliminating a color deviation in a partial designated color region in the expanded color reproduction range CS2.

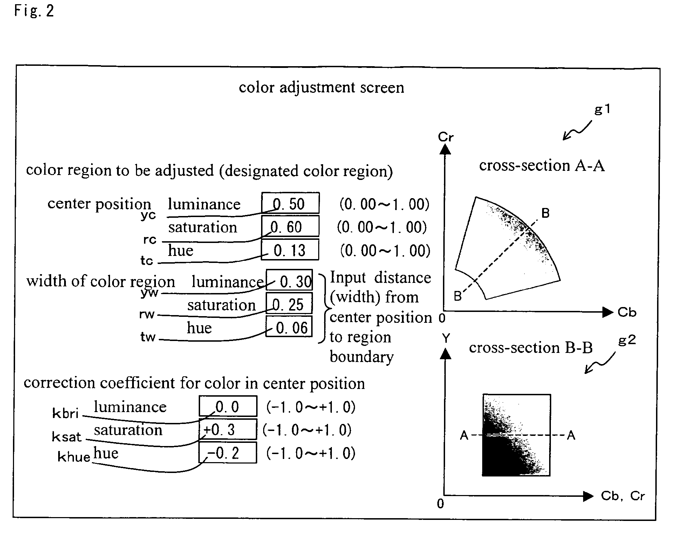

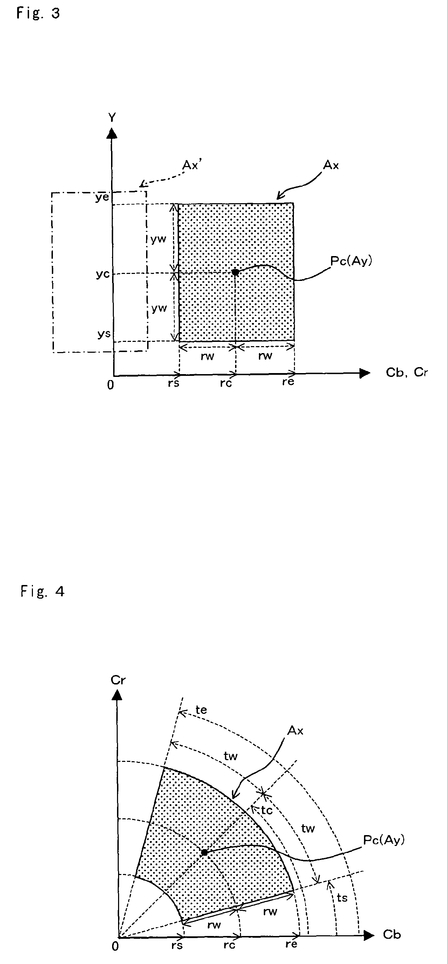

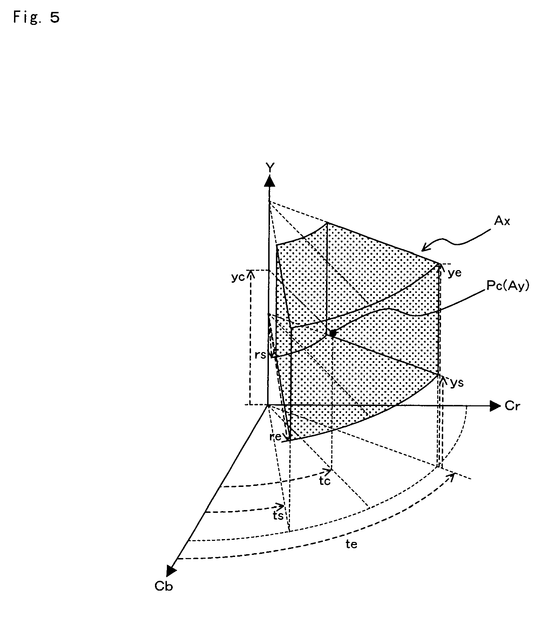

Next, in reference to FIGs. 3 to 5, a color region as a target for the color adjustment processing executed in the bright mode is described. In FIGs. 2 to 5, the same symbols are allotted to the same information (parameters).
When a signal value of the input video signal is a signal value indicating a color within a color region (hereinafter, referred to as a designated color region Ax) to be set (designated) by an operation input of an user, the video processing circuit 2 conducts the color adjustment processing (correction of a signal value) to the signal value.

FIG. 2 shows an example of a color adjustment screen displayed on the liquid crystal panel 4. This color adjustment screen is for confirming a setting of color adjustment parameters used in the color adjustment processing and a result of the color adjustment processing based on the color adjustment parameters.
Upon detecting a prescribed operation input, for example, a pressing operation of a color adjustment key through a remote operator (operating unit) not shown, the MPU 81 in the main control circuit 8 outputs a command to the video processing circuit 2, so that the color adjustment screen is displayed on the liquid crystal panel 4.

Then, the MPU 81 sets the color adjustment parameters in accordance with the user's operation input on a numeric number key in the remote operator.
The color adjustment parameters include parameters: yc, rc, tc, yw, rw, and tw, relating to a designated range of each of a luminance, a saturation, and a hue specifying the designated color region Ax as a color adjustment target, and reference correction coefficients: kbri, ksat, and khye, as a reference for an adjustment quantity of each of a luminance, a saturation, and a hue. In other words, the MPU 81 is an example of a designated color region setting means for setting a designated range of each of a luminance, a saturation, and a hue, while at the same time being an example of a reference correction coefficient setting means for setting reference correction coefficient of each of a luminance, a saturation, and a hue. In addition, the parameters relating to a designated range of each of a luminance, a saturation, and a hue include in the designated color region Ax: yc as a center value of a luminance, rc as a center value of a saturation, tc as a center value of a hue, and, based on each of these center values as a reference, yw as a width of a luminance, rw as a width of a saturation, and tw as a width of a hue. Namely, the designated color region Ax is a color region identified by a designated range of each of the luminance, the saturation, and the hue specified by these parameters yc, rc, tc, yw, rw, and tw.
The color adjustment parameters the MPU 81 has set in accordance with an operation input are recorded in the EERPOM 82 in the control circuit 8.

FIGs. 3 to 5 show an example of the designated color region Ax and a core Ay as a center position Pc in the designated color region Ax on a Ycbcr coordinate system.
In the present embodiment, the width yw of the luminance, the width rw of the saturation, and the width tw of the hue are parameters indicating one second of the entire width of each of a luminance, a saturation, and a hue in the designated color region Ax. However, the width yw of the luminance, the width rw of the saturation, and the width tw of the hue may be parameters indicating the entire width of each of a luminance, a saturation, and a hue in the designated color region Ax. In FIGs. 2 to 5, ys is the minimum value (=ycyw) and ye is the maximum value (=yc-yw) of a luminance both specifying a range of the designated color region Ax; rs is the minimum value (=rc-rw) and re is the maximum value (=rc+rw) both specifying a range of a saturation of the designated color region Ax; and ts is the minimum value (=tc-tw) and tc is the maximum value (=tc+rw) both specifying a range of a hue in the designated color region Ax.
These parameters: ys, rs, ts, ye, re, and te may be set as parameters of a designated range of each of the luminance, the saturation, and the hue, specifying the designated color region Ax.

Next, a concrete example of the color adjustment processing executed in the bright mode is described. In the input video signal, a Y value (luminance value), a Cb value (a differential signal value of blue), and a Cr value (a differential signal value of red) are Yin, Cbin, and Crin, respectively.
Firstly, the video processing circuit 2 calculates polar coordinates (rin, tin) for identifying a saturation and a hue on the Cb-Cr plane of the input video signal, based on the values Cb and Cr of the input video signal (Cbin, Crin). The polar coordinates (rin, tin) can be calculated based on the known Cordic (Cordinate Rotation Computer) algorithm.
Then, the video processing circuit 2 calculates deviations (ΔYin, Δrin, and Δtin) against a color in the core Ay in colors (Yin, rin, and tin) of the input video signal, based on the next formula (A1). Additionally, the following formulae (A1) to (A3) are based on a case where the core Ay is a center position Pc in the designated color region Ax. $\begin{matrix}〈 formula 1 〉 \\ \begin{matrix}Δ y in = \left|Y in-y c\right| & \\ Δ r in = \left|r in-r c\right| & \\ If - 0.5 ≦ \left(t in-t c\right) ≦ 0.5 Then & Δ t in = \left|t in-t c\right| \\ Else & Δ t in = 1.0 - \left|t in-t c\right|\end{matrix} }\end{matrix}$ In the formula (A1),
Δyin: a deviation of a luminance of an input video signal against a luminance of a core
Δrin: a deviation of a saturation of an input video signal against a saturation of a core
Δtin: a deviation of a hue of an input video signal against a hue of a core
Yin: a luminance value of an input video signal
(a polar coordinate of a luminance of an input video signal in a Ycbcr color space)
rin: a polar coordinate of a saturation of an input video signal in a Ycbcr color space
tin: a polar coordinate of a hue of an input video signal in a Ycbcr color space
yc: a polar coordinate (setting value) of a luminance at the center position in a designated color region in a Ycbcr color space
rc: a polar coordinate (setting value) of a saturation at the center position in a designated color region in a Ycbcr color space
tc: a polar coordinate (setting value) of a hue at the center position in a designated color region in a Ycbcr color space
*core: a conter position in a designated color region in a Ycbcr color space
In addition, the video processing circuit 2 calculates a weight coefficient Wyrt of the color adjustment, based on the next formula (A2). $\begin{matrix}〈 formula 2 〉 \\ \begin{matrix}If r w > r o and r in < r c \\ Then Wyrt \\ = \left[1.0-\left(Δ y in/y w\right)\right] \\ \times \left[1.0-\left(Δ r in/r c\right)\right] \\ \times \left[1.0-\left(Δ t in/t w\right)\right] \\ Else Wyrt \\ = \left[1.0-\left(Δ y in/y w\right)\right] \\ \times \left[1.0-\left(Δ r in/r w\right)\right] \\ \times \left[1.0-\left(Δ t in/t w\right)\right]\end{matrix} }\end{matrix}$ In the formula (A2),
Wyrt: weight coefficient for color adjustment
ΔYin: deviation of a luminance of an input video signal against a luminance, of a core
Δrin: deviation of a saturation of an input video signal against a saturation of a core
Δtin: deviation of a hue of an input video signal against a hue of a core
rc: polar coordinate (setting value) of a saturation at the center position in a designated color region in a Ycbcr color space
yw: designated value (setting value) of a width of a luminance of a designated color region in a Ycbcr color space
rw: designated value (setting value) of a width of a saturation of a designated color region in a Ycbcr color space
tw: designated value (setting value) of a width of a hue of a designated color region in a Ycbcr color space
*core: center position in a designated color region in a Ycbcr color space
In calculating a weight coefficient of a saturation component, with a designated value rw of a width of the saturation in the designated color region Ax greater than a polar coordinate value rc of the saturation in the center position Pc, a deviation Δrin of the saturation is divided by a polar coordinate rc at the center position in the saturation, not by a designated value rw of a width of the saturation. When a designated color value includes a region wherein a value of the saturation reaches negative, as shown in a designated color region Ax' in FIG. 3, the above division limits a calculating range of a weight coefficient of a saturation component to a range equal to or greater than zero including a polar coordinate value rc at the center position of the saturation. This allows a weight coefficient of a saturation component to be calculated more precisely than in calculating, with a region wherein a saturation component becomes negative included.
Then, the video processing circuit 2 calculates values Y, Cb and Cr (Yout, Cbout, and Crout) after the color adjustment processing of the input video signal, based on the next formula (A3). $\begin{matrix}〈 formula 3 〉 \\ \begin{matrix}Y out & = y in \times \left(1.0+Wyrt\times k br i\right) \\ C bʹ & = C b in \times \left(1.0+Wyrt\times k sat\right) \\ C rʹ & = C r in \times \left(1.0+Wyrt\times k sat\right) \\ C b out & = \left[\begin{matrix}C bʹ\end{matrix}\times c o s \left(Wyrt\times k hua\right)\right] - \left[\begin{matrix}C rʹ\end{matrix}\times s i n \left(Wyrt\times k hue\right)\right] \\ C r out & = \left[\begin{matrix}C bʹ\end{matrix}\times s i n \left(Wyrt\times k hue\right)\right] + \left[\begin{matrix}C rʹ\end{matrix}\times c o s \left(Wyrt\times k hue\right)\right]\end{matrix} }\end{matrix}$ In the formula (A3),
Yin: luminance value of an input video signal
Cbin: Cb value of an input video signal
Crin: Cr value of an input video signal
Yout: luminance value of a video signal after correction
Cbout: Cb value of a video signal after correction
Crout: Cr value of a video signal after correction
Wyrt: weight coefficient for color adjustment
kbri: correction coefficient (setting value) of a luminance
ksat: correction coefficient (setting value) of a saturation
khue: correction coefficient (setting value) of a hue

The next formula (A0) integrates the above formulae (A1) to (A3). $\begin{matrix}〈 formula 4 〉 \\ \begin{matrix}Δ y in = \left|Y in-yc\right| & \\ Δ r in = \left|r in-rc\right| & \\ If - 0.5 ≦ \left(t in-tc\right) ≦ 0.5 Then & Δ t in = \left|t in-t c\right| \\ Else & Δ t in = 1.0 - \left|t in-t c\right| \\ Wyrt & = \left[1.0-\left(Δ y in/y w\right)\right] \times \left[1.0-\left(Δ r in/r w\right)\right] \times \left[1.0-\left(Δ t in/t w\right)\right] \\ y out & = y in \times \left(1.0+Wyrt\times k bri\right) \\ C bʹ & = C b in \times \left(1.0+Wyrt\times k sat\right) \\ C rʹ & = C r in \times \left(1.0+Wyrt\times k sat\right) \\ C b out & = \left[\begin{matrix}C bʹ\end{matrix}\times c o s \left(Wyrt\times k hue\right)\right] - \left[\begin{matrix}C rʹ\end{matrix}\times s i n \left(Wyrt\times k hue\right)\right] \\ C r out & = \left[\begin{matrix}C bʹ\end{matrix}\times s i n\left(Wyrt\times k hue\right)\right] + \left[\begin{matrix}C rʹ\end{matrix}\times c o s \left(Wyrt\times k hue\right)\right]\end{matrix} }\end{matrix}$ In the formula (A0),
Yin: luminance value of an input video signal (polar coordinate of a luminance of an input video signal in a Ycbcr color space)
Cbin: Cb value of an input video signal
Crin: Cr value of an input video signal
Yout: luminance value of a video signal after correction
Cbout: Cb value of a video signal after correction
Crout: Cr value of a video signal after correction
rin: porlar coordinate of a saturation of an input video signal in a Ycbcr color space
tin: porlar coordinate of a hue of an input video signal in a Ycbcr color space
yc: porlar coordinate (setting value) of a luminance at the center position in a designated color region in a Ycbcr color space
rc: porlar coordinate (setting value) of a saturation at the center position in a designated color region in a Ycbcr color space
tc: porlar coordinate (setting value) of a hue at the center position in a designated color region in a Ycbcr color space
yw: designated value (setting value) of a width of a luminance of a designated color region in a Ycbcr color space
rw: designated value (setting value) of a width of a saturation of a designated color region in a Ycbcr color space
tw: designated value (setting value) of a width of a hue of a designated color region in a Ycbcr color space
kbri: correction coefficient (setting value) of a luminance
ksat,: correction coefficient (setting value) of a saturation
khue: correction coefficient (setting value) of a hue

With the color adjustment processing based on the above formulae (A1) to (A3), the video processing circuit 2 (an example of a signal correcting means) corrects a signal value of the input video signal indicating a color within the designated color region Ax as below.
In other words, when a color indicated by a signal value of the input video signal is a color in the core Ay (here, the center position Pc) in the designated color region Ax, the weight coefficient for the color correction is Wyrt=1, and each of a luminance Yin, a saturation rin, and a hue tin of the color is corrected only by the correction quantity corresponding to the reference correction coefficient (kbri, ksat, and khue). Here, the correction quantity (adding amount) of each of a luminance, a saturation, and a hue is a value obtained by multiplying the luminance yin, the saturation rin, and the hue tin of the input video signal by the reference correction coefficients kbri, ksat, and kue, respectively.
In addition, when a color indicated by a signal value of the input video signal is a color other than a color in the core Ay in the designated color region Ax (in otherwise), the weight coefficient Wyrt for the color correction reaches closer to 0 as the position in a color space of a color indicated by a signal value of the input video signal approaches a boundary position in the designated color region Ax (moves away from the core Ay). As a result, each of a luminance Yin, a saturation rin, and a hue tin of a color of a signal value is corrected only by the correction quantity gradually smaller as a position of a color of the signal value of the input video signal approaches a boundary position of the designated color region Ax. Additionally, a correction quantity of a signal value of a color at a boundary position of the designated color region Ax is zero. Therefore, before/after the signal value correction, the color continuity (gradation) can be ensured.

The example in FIG. 2 shows a color adjustment screen including distribution charts g1 and g2 of display colors in the designated color region Ax at the time of conducting the color adjustment processing based on the set color adjustment parameters. With such distribution charts g1 and g2 displayed on the liquid crystal panel 4, an user can understand at a glance how setting values of the color adjustment parameters are reflected on an actual color correction.

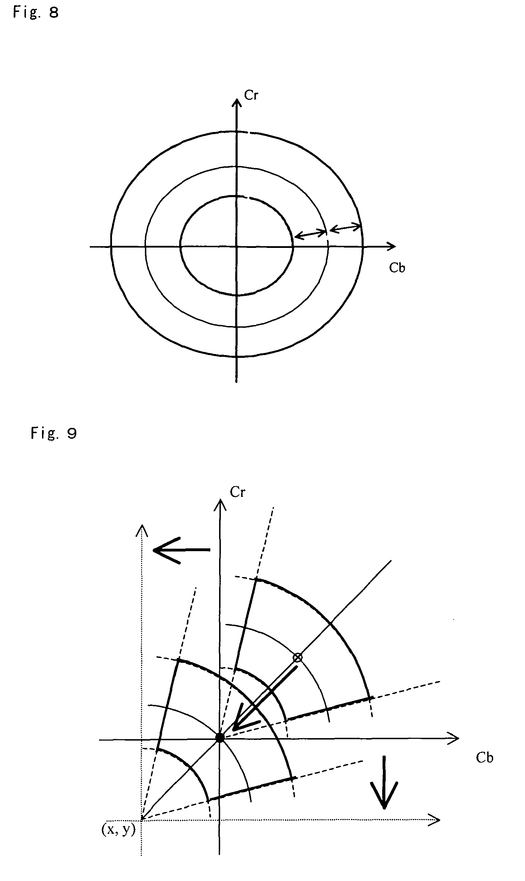

As a variation of the color adjustment processing, the next formula (A4) may be employed in calculating a weight coefficient Wyrt for a color correction, instead of the above formula (A2). $\begin{matrix}〈 formula 5 〉 \\ \begin{matrix} \begin{matrix}Wy = \left[1.0-\left(Δ y in/y w\right)\right] \\ Wr = \left[1.0-\left(Δ r in/r w\right)\right] \\ Wt = \left[1.0-\left(Δ t in/t w\right)\right] \\ Wyrt = Wy \times Wr \times Wt\end{matrix} & \end{matrix} } \\ \\ \\ \\ \end{matrix}$ however, each coefficient of Wy, Wr, and Wt can be set to 1 separately
In the formula (A4),
Wyrt: weight coefficient for color adjustment
Wy: weight coefficient for color adjustment of a luminance
Wr: weight coefficients for color adjustment of a saturation
Wt: weight coefficient for color adjustment of a hue
Δyin: deviation of a luminance of an input video signal against a luminance of a core
Δrin: deviation of a saturation of an input video signal against a saturation of a core
Δtin: deviation of a hue of an input video signal against a hue of a core
rc: polar coordinate (setting value) of a saturation at the center position in a designated color region in a Ycbcr color space
yw: designated value (setting value) of a width of a luminance of a designated color region in a Ycbcr color space
rw: designated value (setting value) of a width of a saturation of a designated color region in a Ycbcr color space
tw: designated value (setting value) of a width of a hue of a designated color region in a Ycbcr color space
*core: center position in a designated color region in a Ycbcr color space
A weight coefficient Wyrt for a color correction is calculated by setting a weight coefficient of the color correction for every component of each of a luminance, a saturation, and a hue. With respect to the every designated color region Ax or the entire range of the designated color region Ax, 1 or a prescribed value may be set, sparing calculations of a weight coefficient for every component of each of a luminance, a saturation, and a hue. This decreases a calculation amount in calculating a weight coefficient of the color correction value and reduces hardware resources necessary for calculation, thereby shortening the calculation time.
When a prescribed first value set to a weight coefficient for a color correction for every component of each of a luminance, a saturation, and a hue is less than 1 (for example, 0.5), the component of each of a luminance, a saturation, and a hue of the input video signal is corrected by a value smaller than the reference correction coefficient. When the first prescribed value is greater than 1 (for example, 1.5), the component of each of a luminance, a saturation, and a hue of the input video signal is corrected by a value greater than the reference correction coefficient.
As shown in FIG. 8, for example, when the input video signal is corrected with Wt=1 with respect to the entire hue, the correction coefficient uniformly relates to the hue, thereby uniformly correcting a toroidal range surrounded by the minimum value rs and the maximum value re of the saturation. Additionally, with the hue Wt=1 in the above example, a weight coefficient of a component of a hue is not affected in calculation of a weight coefficient Wyrt of a color correction value. The above-mentioned 0.5, 1, and 1.5 are examples of a prescribed first value to be set.

As a variation of the color adjustment processing, the next formula (A5) may be employed in calculating values Cb' and Cr', instead of the above formula (A3). $\begin{matrix}〈 formula 6 〉 \\ \begin{matrix}Cbʹ & = \left(\left(c b in+C b off\right)\times \left(1.0+Wyrt\times k sat\right)\right) - C b off \\ Crʹ & = \left(\left(c r in+C r off\right)\times \left(1.0+Wyrt\times k sat\right)\right) - C r off\end{matrix} }\end{matrix}$ In the formula (A5),
Cboff: offset to a Cb value of an input video signal
Croff: offset to a Cr value of an input video signal
When a value of the input video signal to be corrected is a reference for calculating a correction value, and when correcting a region of an achromatic color having 0 component of the saturation and the hue at a origin position in the color space, the above (A3) cannot be employed to correct the component of a saturation and a hue.
Here, as shown in FIG. 9, the values Cb and Cr of the input video signal are offset in a correction of a value of the input signal including the origin point. The offset Cb and Cr values are used for the correction processing, and then the offset value is subtracted from each of the corrected Cb and Cr values. This allows the correction of an achromatic color region.
An origin position in the color space where a value of the input video signal to be corrected is a reference for calculating a correction value is preferred to be subjected to the processing, along with a position where the component of a saturation and a hue included in a value of the input signal becomes zero.
A prescribed value to be offset can be identified arbitrarily in accordance with a processing system per example of a prescribed second value, and may be 1, 2, -1, and -2.

There may be a case where a color region occupying a certain range at the center of the designated color region Ax is the core Ay, and the reference correction coefficients (kbri, ksat, and khue) is required to be applied to the core Ay. In this case, the core Ay only needs to be a position occupying a predetermined range around a center position Pc in the designated color region Ax.

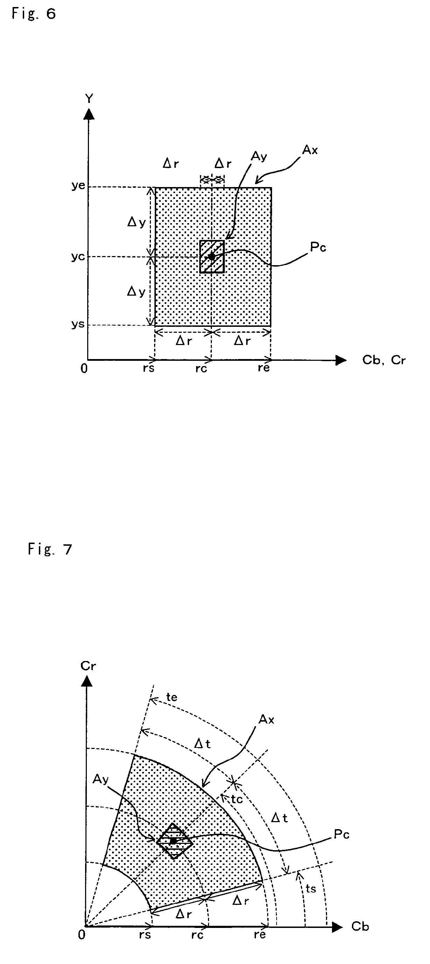

FIGs. 6 and 7 show an example (the second example) of the designated color region Ax and the core Ay, with the core Ay occupying a certain range around the center position Pc.
Here, for example, a parameter (hereinafter, referred to as "core ratio setting value") specifying a occupying ratio of the core Ay with respect to the designated color region Ax may be previously set and previously recorded in the EEPROM 2 in the main control circuit 8. In this case, the core Ay is a portion occupying a range of a prescribed ratio (ratio determined by the core ratio setting value) with respect to the designated color region Ax around a center position Pc in the designated color region Ax.
Additionally, the core ratio setting value may be set in accordance with an operation input of an user via a screen shown in FIG. 2 and a remote operator and the like, and, other than that, be previously set to a fixed value.
The core ratio setting value indicates, for example, a ratio of a width of a luminance, a saturation, and a hue of the core Ay, with respect to a luminance width (=2×yw), a saturation width (=2×rw), and a hue width (=2×tw) in the designated color region Ax. FIGs 6 and 7 are examples wherein the ratio is generally 20%.

Then, the MPU 81 in the main control circuit 8 may specify a range of the core Ay based on parameters of the designated color region Ax and the core ratio setting value and send information of the specified result to the video processing circuit 2.
When the size of the core Ay is required to be enlarged/reduced as the size change of the designated color region Ax, this omits a changing process of a parameter designating the size of the core Ay in accordance with every setting change of the designated color region Ax, and thereby facilitating a setting (designation) of color adjustment parameters.

Next, a concrete example of the color adjustment processing executed in the bright mode, with a predetermined range occupied by the core Ay is described.
Firstly, the video processing circuit 2, as mentioned above, calculates polar coordinates (rin, tin) for identifying the saturation and the hue on a Cb-Cr plane of the input video signal, based on the values Cb and Cr (Cbin, Crin) of the input video signal.
Then, the video processing circuit 2 calculates deviations (ΔYin, Δrin, and Δtin) against colors in the core Ay in colors (Yin, rin, and tin) of the input video signal, based on the next formula (B1). $\begin{matrix}〈 formula 7 〉 \\ \begin{matrix}\begin{matrix}y cmin = y c - yw \times k core , & y cmax = y c + y w \times k core \\ r cmin = r c - rw \times k core , & r cmax = r c + r w \times k core \\ t cmin = t c - tw \times k core , & t cmax = t c + t w \times k core \\ & \\ & \end{matrix} \\ \begin{matrix}if Y in < y cmin then & Δ y in = \left|Y in-y cmin\right| \\ if Y in > y cmax then & Δ y in = \left|Y in-y cmax\right| \\ else & Δ y in = 0 \\ & \\ & \\ if r in < r c min then & Δ r in = \left|r in-r cmin\right| \\ if r in > r c max then & Δ r in = \left|r in-r cmax\right| \\ else & Δ y in = 0 \\ & \\ & \end{matrix} \\ \begin{matrix}if t in < t cmin & \\ then & \\ if - 0.5 ≦ \left(t in-t cmin\right) ≦ 0.5 Then & Δ t in = \left|t in-t cmin\right| \\ else & Δ t in = 1.0 - \left|t in-t cmin\right| \\ else - if t in > t cmax & \\ then & \\ if - 0.5 ≦ \left(t in-t cmax\right) ≦ 0.5 Then & Δ t in = \left|t in-t cmax\right| \\ else & Δ t in = 1.0 - \left|t in-t cmax\right| \\ else & Δ y in = 0\end{matrix}\end{matrix} }\end{matrix}$ In the formula (B 1),
Δyin: deviation of a luminance of an input video signal against a luminance of a core
Δrin: deviation of a saturation of an input video signal against a saturation of a core
Δtin: deviation of a hue of an input video signal against a hue of a core
Yin: luminance value of an input video signal (polar coordinate of a luminance of an input video signal in a Ycbcr color space)
rin: porlar coordinate of a saturation of an input video signal in a Ycbcr color space
tin: porlar coordinate of a hue of an input video signal in a Ycbcr color space
yc: porlar coordinate (setting value) of a luminance at the center position in a designated color region in a Ycbcr color space
rc: porlar coordinate (setting value) of a saturation at the center position in a designated color region in a Ycbcr color space
tc: porlar coordinate (setting value) of a hue at the center position in a designated color region in a Ycbcr color space
kcore: ratio (setting value) of a core with respect to a designated color region
*core: a prescribed range having a center position in a designated color region in a Ycbcr color space as a center
In addition, the video processing circuit 2 calculates a weight coefficient Wyrt of the color adjustment, based on the next formula (B2). $\begin{matrix}〈 formula 8 〉 \\ \begin{matrix}If r w > r c and r in < r c \\ Then If rc > \left(rw\times K core\right) \\ Then Wyrt \\ = \left[1.0-\left\{Δ y in/\left(y w-y w\times k core\right)\right\}\right] \\ \times \left[1.0-\left\{Δ r in/\left(r c-r w\times k core\right)\right\}\right] \\ \times \left[1.0-\left\{Δ t in/\left(t w-t w\times k core\right)\right\}\right] \\ Else Wyrt \\ = \left[1.0-\left\{Δ y in/\left(y w-y w\times k core\right)\right\}\right] \\ \times \left[1.0-\left\{Δ t in/\left(t w-t w\times k core\right)\right\}\right] \\ Else Wyrt \\ = \left[1.0-\left[Δ y in/\left(y w-y w\times k core\right)\right]\right] \\ \times \left[1.0-\left\{Δ r in/\left(r c-r w\times k core\right)\right\}\right] \\ \times \left[1.0-\left\{Δ t in/\left(t w-t w\times k core\right)\right\}\right]\end{matrix} }\end{matrix}$ In the formula (B2),
Wyrt: weight coefficient for color adjustment
Δyin: deviation of a luminance of an input video signal against a luminance of a core
Δrin: deviation of a saturation of an input video signal against a saturation of a core
Δtin: deviation of a hue of an input video signal against a hue of a core
rc: porlar coordinate (setting value) of a saturation at the center position in a designated color region in a Ycbcr color space
yw: designated value (setting value) of a width of a luminance of a designated color region in a Ycbcr color space
rw: designated value (setting value) of a width of a saturation of a designated color region in a Ycbcr color space
tw: designated value (setting value) of a width of a hue of a designated color region in a Ycbcr color space
kcore: ratio (setting value) of a core with respect to a designated color region
*core: a prescribed range having a center position in a designated color region in a Ycbcr color space as a center
In calculating a weight coefficient, a value of a portion (rc-rw×kcore) related to a weight coefficient of a saturation component in (B2) may become negative, and the weight coefficient may therefore be calculated, with the ratio of the saturation component increased compared to ratios of other components. Here, when a value of a portion (rc-rw×kcore) related to a weight coefficient of a saturation component becomes negative, the value of {Δrin/(rc-rw×kcore)} is set to zero.
Then, the video processing circuit 2 calculates values Y, Cb and Cr (Yout, Cbout, and Crout) after the color adjustment processing of the input video signal, based on the next formula (B3). $\begin{matrix}〈 formula 9 〉 \\ \begin{matrix} \begin{matrix}y out = y in \times \left(1.0+Wyrt\times k bri\right) \\ C bʹ = C b in \times \left(1.0+Wyrt\times k sat\right) \\ C rʹ = C r in \times \left(1.0+Wyrt\times k sat\right) \\ C b out \\ = \left[\begin{matrix}C bʹ\end{matrix}\times c o s \left(Wyrt\times k hue\right)\right] - \left[\begin{matrix}C rʹ\end{matrix}\times s i n \left(Wyrt\times k hue\right)\right] \\ C r out \\ = \left[\begin{matrix}C bʹ\end{matrix}\times s i n \left(Wyrt\times k hue\right)\right] + \left[\begin{matrix}C rʹ\end{matrix}\times c o s \left(Wyrt\times k hue\right)\right]\end{matrix}\end{matrix} }\end{matrix}$ In the formula (B3),
Yin: luminance value of an input video signal
Cbin: Cb value of an input video signal
Crin: Cr value of an input video signal
Yout: luminance value of a video signal after correction
Cbout: Cb value of a video signal after correction
Crout: Cr value of a video signal after correction
Wyrt: weight coefficient for color adjustment
kbri: correction coefficient (setting value) of a luminance
ksat: correction coefficient (setting value) of a saturation
khue: correction coefficient (setting value) of a hue

The next formula (B0) integrates the above formulae (B1) to (B3). $\begin{matrix}〈 formula 10 〉 \\ \begin{matrix}\begin{matrix}y cmin = y c - y w \times k core , & y cmax = y c + y w \times k core \\ r cmin = r c - r w \times k core , & r cmax = r c + r w \times k core \\ t cmin = t c - t w \times k core , & t cmax = t c + t w \times k core \\ & \\ & \end{matrix} \\ \begin{matrix}if Y in < y c min then & Δ y in = \left|Y in-y cmin\right| \\ if Y in > y c max then & Δ y in = \left|Y in-y cmax\right| \\ else & Δ y in = 0 \\ & \\ & \\ if r in < r c min then & Δ r in = \left|r in-r cmin\right| \\ if r in > r c max then & Δ r in = \left|r in-r cmax\right| \\ else & Δ y in = 0 \\ & \\ & \end{matrix} \\ \begin{matrix}if t in < t cmin & \\ then & \\ if - 0.5 ≦ \left(t in-t cmin\right) ≦ 0.5 Then & Δ t in = \left|t in-t cmin\right| \\ else & Δ t in = 1.0 - \left|t in-t cmin\right| \\ else - if t in > t cmax & \\ then & \\ if - 0.5 ≦ \left(t in-t cmax\right) ≦ 0.5 Then & Δ t in = \left|t in-t cmax\right| \\ else & Δ t in = 1.0 - \left|t in-t cmax\right| \\ else & Δ t in = 0 \\ & \\ wyrt & \\ = \left[1.0-\left\{Δ y in/\left(y w-y w\times k core\right)\right\}\right] & \\ \times \left[1.0-{Δ r in/\left(r c-r W\times k core\right)⌉\right] & \\ \times \left[1.0-{Δ t in/\left(t W-t W\times k core\right)⌉\right] & \\ & \\ y out = y in \times \left(1.0+Wyrt\times k bri\right) & \\ C bʹ = C b in \times \left(1.0+Wyrt\times k sat\right) & \\ C rʹ = C r in \times \left(1.0+Wyrt\times k sat\right) & \\ C b out & \\ = \left[\begin{matrix}C bʹ\end{matrix}\times c o s\left(Wyrt\times k hue\right)\right] - \left[\begin{matrix}C rʹ\end{matrix}\times sin\left(Wyrt\times k hue\right)\right] & \\ C r out & \\ = \left[\begin{matrix}C bʹ\end{matrix}\times s i n\left(Wyrt\times k hue\right)\right] + \left[\begin{matrix}C rʹ\end{matrix}\times cos\left(Wyrt\times k hue\right)\right] & \end{matrix}\end{matrix} }\end{matrix}$ In the formula (B0),
Yin: luminance value of an input video signal (polar coordinate of a luminance of an input video signal in a Ycbcr color space)
Cbin: Cb value of an input video signal
Crin: Cr value of an input video signal
Yout: luminance value of a video signal after correction
Cbout: Cb value of a video signal after correction
Crout: Cr value of a video signal after correction
rin: porlar coordinate of a saturation of an input video signal in a Ycbcr color space
tin: porlar coordinate of a hue of an input video signal in a Ycbcr color space
yc: porlar coordinate (setting value) of a luminance at the center position in a designated color region in a Ycbcr color space
rc: porlar coordinate (setting value) of a saturation at the center position in a designated color region in a Ycbcr color space
tc: porlar coordinate (setting value) of a hue at the center position in a designated color region In a Ycbcr color space
yw: designated value (setting value) of a width of luminance of a designated color region in a Ycbcr color space
rw: designated value (setting value) of a width of a saturation of a designated color region in a Ycbcr color space
tw: designated value (setting value) of a width of a hue of a designated color region in a Ycbcr color space
kcore: ratio (setting value) of a core with respect to a designated color region
kbri: correction coefficient (setting value) of a luminance
ksat: correction coefficient (setting value) of a saturation
khue: correction coefficient (setting value) of a hue
*core: a prescribed range having a center position in a designated color region in a Ycbcr color space as a center

As a variation of the color adjustment processing, the next formula (B4) may be employed in calculating a weight coefficient Wyrt for a color correction, instead of the above formula (A2). $\begin{matrix}〈 \begin{matrix}formula 11\end{matrix} 〉 \\ \begin{matrix} \begin{matrix} Wy = \left\{1.0-\left(Δ y in/y w\right)\right\} \\ Wr = \left\{1.0-\left(Δ r in/r w\right)\right\} \\ Wt = \left\{1.0-\left(Δ t in/t w\right)\right\} \\ Wvrt = Wv \times Wr \times Wt \\ however , each coefficient of Wy , Wr , and Wt can be set to 1 separately\end{matrix}\end{matrix} }\end{matrix}$ In the formula (B4),
Wyrt: weight coefficient for color adjustment
Wy: weight coefficient for color adjustment of a luminance
Wr: weight coefficient for color adjustment of a saturation
Wt: weight coefficient for color adjustment of a hue
Δyin: deviation of a luminance of an input video signal against a luminance of a core
Δrin: deviation of a saturation of an input video signal against a saturation of a core
Δtin: deviation of a hue of an input video signal against a hue of a core
rc: polar coordinate (setting value) of a saturation at the center position in a designated color region in a Ycbcr color space
yw: designated value (setting value) of a width of a luminance of a designated color region in a Ycbcr color space
rw: designated value (setting value) of a width of a saturation of a designated color region in a Ycbcr color space
tw: designated value (setting value) of a width of a hue of a designated color region in a Ycbcr color space
*core: center position in a designated color region in a Ycbcr color space

As a variation of the color adjustment processing, the next formula (B5) may be employed in calculating values Cb' and Cr', instead of the above formula (B3). $\begin{matrix}〈 \begin{matrix}formula 12\end{matrix} 〉 \\ \begin{matrix}C bʹ & = \left(\left(C b in+C b off\right)\times \left(1.0+Wyrt\times k sat\right)\right) - C b off \\ C rʹ & = \left(\left(C r in+C r off\right)\times \left(1.0+Wyrt\times k sat\right)\right) - C r off\end{matrix} }\end{matrix}$ In the formula (B5),
Cboff. offset to a Cb value of an input video signal
Croff: offset to a Cr value of an input video signal
The color adjustment processing based on the above formulae (B1) to (B5) or the formula (B0) achieves a working effect same as the color adjustment processing based on the forementioned formulae (A1) to (A5) or the formula (A0).

In the above embodiment, the MPU 81 sets designated values yw, rw, and tw of a width of each of a luminance, a saturation, and a hue in accordance with an operation input on a numeral key in a remote operator not shown, however, other setting methods may be employed.
For example, a plurality of candidates (hereinafter, referred to as "designated width candidate data") of combinations of designated values yw, rw, and tw of a width of each of a luminance, a saturation, and a hue may be previously recorded in the EEPROM 82. In this case, the MPU 81 sets designated values yw, rw, and tw of a width of each of the luminance, the saturation, and the hue by selecting from a plurality of designated width candidate data in accordance with an operation input on a selection key in the remote operator. A plurality of designated width candidate data is, for example, previously set by being divided into three levels (large, medium, and small) or five levels (large, slightly large, medium, slightly small, and small).
This facilitates a setting (designation) of color adjustment parameters, even though the degree of freedom of the color adjustment might be somewhat sacrificed.
Additionally, in a video display device capable of switching the video display mode among a plurality of modes (such as, a standard mode, a bright mode), an setting value of color adjustment parameters appropriate for each video display mode may be previously known. In such a case, the color adjustment parameters for each video display mode may be previously recorded in a memory such as the EEPROM 82, so that the MPU 81 automatically selects the color adjustment parameters supporting the video display mode and sets the parameters in the video processing circuit 2.

And also, the MPU 81 (an example of a core selecting means) in the main control circuit 8 may select (switch), in accordance with an operation input by an user through the remote operator and the like, between whether the core Ay is the center position Pc in the designated color region Ax or a portion occupying a range of a ratio previously set with respect to the designated color region Ax around the center position Pc in the designated color region Ax.
This allows the degree of freedom of the color adjustment to be enhanced, without increasing time and labor for setting color adjustment parameters.

The present invention is applicable to a video display device.

## Claims

1. A video display device for correcting a signal value of an input video signal and displaying a video based on a corrected video signal on a display, the video display device comprising:
a designated color region setting means for setting a designated range of a luminance, a saturation, and a hue;
a reference correction coefficient setting means for setting a reference correction coefficient of a luminance, a saturation, and a hue; and
a signal correcting means for correcting a luminance, a saturation and a hue of a color by the correction quantity corresponding to a reference correction coefficient with regard to a signal value of an input video signal indicating a color within a designated color region defined by a designated range of the luminance, the saturation, and the hue when the color indicated by the signal value is a color in the center position in the designated color region or at a core occupying a predetermined range around the center, the signal correcting means otherwise correcting each of a luminance, a saturation, and a hue of a color of the signal value by the correction quantity gradually smaller as a position in a color space of the color indicated by the signal value approaches a boundary position of the designated color region.

2. The video display device according to Claim 1 for setting a center value of each of a luminance, a saturation, and a hue in the designated color region and a designated value of a width of each of the luminance, the saturation, and the hue based on the center value in accordance with an operation input, so as to set a designated range of each of the luminance, the saturation, and the hue.

3. The video display device according to Claim 2 wherein the designated color region setting means sets a designated value of a width of each of the luminance, the saturation, and the hue by selecting from a plurality of predetermined candidate values in accordance with an operation input.

4. The video display device according to any one of Claims 1 to 3, wherein the core is a portion occupying a range of a previously set ratio with respect to the designated color region around the center position in the designated color region.

5. The video display device according to any one of Claims 1 to 4, comprising a core selecting means for selecting, in accordance with an operation input, between whether the center position in the designated color region is the core or a portion occupying a range of a predetermined ratio with respect to the designated color region around the center position in the designated color region.

6. The video display device according to any one of Claims 1 to 5, wherein the signal correcting means calculates the correction quantity of a saturation gradually smaller as its position approaches a boundary position exclusively within a region wherein a saturation value is greater than or equal to zero and including the center position or the core, when a signal value of the input video signal to be corrected includes within the designated color region a region wherein a saturation value in the color space becomes negative.

7. The video display device according to any one of Claims 1 to 6, further comprising a weight correction coefficient setting means for setting a correction quantity of each of a luminance, a saturation, and a hue gradually smaller as approaching a boundary position to a value same as the reference correction coefficient or a prescribed first value of each of the luminance, the saturation, and the hue.

8. The video display device according to any one of Claims 1 to 7, wherein, with an origin position in the color space included in the designated color region as a reference position for correcting a signal value of the input video signal, the signal correcting means corrects each of a luminance, a saturation, and a hue of a color of the signal after adding a prescribed second value to a value indicating the origin position, and, after the correction, subtracts the prescribed second value from a value indicating the signal.

9. The video display device according to Claim 8, wherein, at the origin position, a value indicating a saturation and a hue and included in a signal value of the input video signal is zero.

10. The video display device according to any one of Claims 1 to 9, wherein the input video signal is a video signal conforming to the sRGB standard, and the display is a wide color gamut display developing a color reproduction range wider than the color reproduction range of the sRGB standard, upon receiving a video signal conforming to the sRGB standard.

11. The video display device according to Claim 10, wherein the wide color gamut display is a liquid crystal panel illuminated by a backlight having an LED as a light source.
